# DEMANDE DE BREVET EUROPEEN

(11) **EP 1 160 214 A1**
(43) Date de publication de la demande: **05.12.2001**
(21) Numéro de dépôt: 01401356.9
(22) Date de dépôt: 23.05.2001
(51) Int. Cl.: C03C 17/36, C03C 17/34

(54) **Vitrage comprenant au moins une couche a proprietes thermochromes**

(30) Priorité: 23.05.2000 FR 0006585
(71) Demandeur: SAINT-GOBAIN GLASS FRANCE, 92400 Courbevoie (FR)
(72) Inventeur: Arnaud, Alain, 78000 Versailles (FR); Beteille, Fabien, 75017 Paris (FR); Giron, Jean-Christophe, 75012 Paris (FR); Lerbet, Francois, 07100 Beaulieu les Annonay (FR)
(74) Mandataire: Renous Chan, Véronique

(57) **Abrégé**

L'invention a pour objet les vitrages comprenant au moins une couche à propriétés thermochromes à base d'oxyde de vanadium, et également au moins une autre couche à propriétés thermiques (réfléchissante dans l'infrarouge), et/ou au moins une autre couche à propriétés optiques (anti-réfléchissante dans le visible) et/ou à propriétés de conduction électrique.

Il s'agit notamment de faire des vitrages de contrôle solaire.

## Description

La présente invention concerne les vitrages au sens large du terme (tout substrat ou assemblage de substrats substantiellement transparent(s)), qui sont munis de couches minces à propriétés thermochromes.

Elle s'intéresse plus particulièrement aux couches thermochromes à base d'oxyde de vanadium.

Ce matériau a déjà été beaucoup étudié. Il s'agit d'un matériau qui, par distorsion cristallographique, commute à une température de l'ordre de 70°C d'un comportement isolant à un comportement de conducteur électrique lorsque la température augmente. Cette modification dans ses propriétés électriques s'accompagne d'une modification dans ses propriétés optiques, essentiellement dans l'infrarouge (lorsque la température de la couche dépasse la température de commutation, la couche devient réfléchissante et absorbante dans l'infrarouge). C'est un des rares composés thermochromes connus à présenter une telle transition à une température relativement proche de la température ambiante, d'où l'intérêt qu'il suscite pour faire des vitrages qui puissent, par exemple, filtrer les rayonnements solaires que lorsqu'il fait chaud.

Pour abaisser la température de commutation de l'oxyde de vanadium à des températures de l'ordre de 25 à 55°c, gamme de températures plus appropriée pour un tel rôle, il a notamment été proposé dans le brevet US-4 401 690 d'y incorporer un dopant du type niobium, tantale, molybdène, iridium ou tungstène. Il a été également proposé dans la demande de brevet WO99/62836 d'incorporer dans l'oxyde de vanadium à la fois du tungstène et du fluor.

Cependant, quand on utilise ce matériau seul, en couche mince, il n'y a pas une infinité de possibilités pour moduler conjointement ses propriétés optiques et thermiques, voire électriques, selon que l'on se trouve au-dessous ou au-dessus de sa température de commutation.

L'invention a alors pour but de donner plus de souplesse dans les différentes propriétés de ce matériau thermochrome, notamment afin de pouvoir conférer aux vitrages qui en sont munis des fonctionnalités plus modulables, voire de nouvelles fonctionnalités.

L'invention a tout d'abord pour objet un vitrage qui comporte au moins une couche à propriétés thermochromes à base d'oxyde de vanadium, éventuellement sous-stoechiométrique en oxygène, et qui comporte, en outre, au moins une autre couche à propriétés thermiques, notamment au moins une autre couche réfléchissant au moins partiellement dans l'infrarouge, et/ou au moins une autre couche à propriétés optiques, notamment anti-réfléchissante dans le visible, et/ou au moins une autre couche à propriété de conduction électrique.

Au sens de l'invention, le terme « vitrage » est à prendre dans son sens le plus large, à savoir tout substrat ou assemblage de substrats essentiellement transparent(s), dont des exemples seront détaillés ci-dessous et qui peuvent être de nature minérale (verre), organique (polymère). Ils peuvent être rigides (verre, polycarbonate), semi-rigides ou flexibles (polyéthylènétéréphtalate, polychlorure de vinyle, ...). Généralement, le vitrage en question comporte au moins un substrat rigide ou semi-rigide. Il peut aussi s'agir d'un vitrage « incomplet », non encore assemblé, et dans ce cas il peut ne comprendre que un ou plusieurs substrats flexibles.

Au sens de l'invention, on comprend par "oxyde de vanadium" celui des oxydes de ce métal qui présente des propriétés thermochromes, à savoir essentiellement le dioxyde de vanadium VO₂. Dans le même esprit, on comprend par une sous-stoechiométrie en oxygène, un oxyde de vanadium répondant à la formule VOₓ avec x < 2. Cela englobe des structures homogènes (où toute la couche est dans un état sous-oxydé) ou hétérogènes (où la couche a une structure hétérogène, avec des phases plus ou moins oxydées, pouvant contenir des inserts de vanadium encore sous forme métallique, comme cela sera détaillé plus loin).

Au sens de l'invention, chacun des trois types de couches que l'on peut associer aux couches thermochromes et que l'on a énumérées plus haut (fonction thermique, fonction de conduction électrique, fonction optique) peut en fait remplir simultanément au moins deux de ces fonctions : une couche conductrice par exemple à base d'oxyde métallique peut aussi, par une épaisseur et un indice de réfraction appropriés, avoir une fonction optique, notamment pour atténuer la réflexion dans le visible du vitrage.

On peut également exploiter les propriétés de conduction électrique d'une couche réfléchissant les infrarouges.

L'invention a donc mis au point l'association sur un même vitrage, de deux types de couches très différentes, dont les propriétés vont pouvoir se combiner pour donner des résultats très originaux. On a en effet, dans le cas où l'on associe à la couche d'oxyde de vanadium une ou des couches à propriétés thermiques :
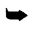 d'une part, une couche thermochrome, la couche « active » dont les propriétés ont deux états selon la température d'utilisation, mais pour laquelle on a peu de marge de manoeuvre pour établir des compromis, notamment entre propriétés thermiques et optiques,
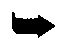 d'autre part, la couche réfléchissante « passive » en ce sens que ses propriétés restent substantiellement inchangées dans les températures envisagées (températures extérieures normales sur toute une année), et qui va pouvoir interagir, notamment interférentiellement quand les couches sont dans le même empilement, avec la couche thermochrome pour multiplier les possibilités de variations dans les propriétés conférées au vitrage porteur.

Avantageusement, la ou les couches à propriétés thermiques évoquées plus haut (les couches « passives » au sens de l'invention), peuvent être selon une première variante à base de métal ou d'alliage métallique à partir d'un ou plusieurs des métaux suivants : or Au, argent, Ag, nickel Ni, chrome Cr, ou alliages comme l'acier ou l'Inconel. Les métaux ou alliages métalliques peuvent par ailleurs être partiellement nitrurés, notamment en ce qui concerne le nickel et le chrome. Le mode de réalisation préféré consiste à choisir l'argent, métal sélectif, offrant en lui-même un bon compromis entre propriétés optiques (transmission lumineuse), et propriétés thermiques (réflexion dans l'infrarouge).

Selon une seconde variante, la ou les couches à propriétés thermiques est ou sont à base de nitrure(s) métallique(s) choisi(s) parmi l'un au moins des nitrures suivants : nitrure de titane TiN, nitrure de chrome CrN, nitrure de niobium NbN, nitrure de zirconium ZrN.

Avantageusement, la ou les couches à base d'oxyde de vanadium, les couches « actives » au sens de l'invention, est ou sont modifiée(s) afin d'abaisser leur température de commutation T_{C} à une valeur inférieure à 60° ou à 50° ou 45°C, par exemple jusqu'à une gamme de valeurs comprise entre 25 et 40°C.

La modification peut être d'ordre chimique, en ajoutant un « dopant » comme cela est connu de la littérature, notamment un métal choisi parmi le titane Ti, le niobium Nb, le molybdène Mo, l'iridium Ir ou le tungstène W. Le dopant peut aussi être choisi parmi les halogènes, notamment être du fluor. On peut utiliser plusieurs dopants. Généralement, le taux de dopant dans la couche est compris entre 0,1 et 10% atomique par rapport au vanadium. On pourra se reporter aux brevets précités pour plus de détails.

La modification peut aussi être d'ordre physique, par exemple en ajustant les paramètres de dépôt de la couche.

Cette modification (chimique ou physique) va donc abaisser la température à laquelle l'oxyde vanadium joue pleinement son rôle de couche de contrôle solaire, le rendant efficace dès que l'on atteint 25, 30°C , 50°C ou 60°C par exemple. Il a aussi une autre conséquence, qui, de façon inattendue, s'est avérée attractive pour l'utilisateur du vitrage : il rend la commutation de la couche visible, avec notamment une augmentation sensible de la réflexion lumineuse quand on dépasse la température de commutation. L'utilisateur peut alors se rendre compte de la modification de la fonctionnalité de la couche de ses propres yeux.

La ou les couches à base d'oxyde de vanadium doivent être au moins partiellement cristallisées pour présenter les propriétés thermochromes recherchées. Cette cristallisation peut être obtenue pendant le dépôt de la couche ou par un traitement postérieur au procédé de dépôt. Ce traitement, pendant ou après le dépôt, peut consister en un traitement thermique ou un bombardement par un faisceau d'ions approprié.

Ainsi, on peut utiliser la technique de dépôt par pulvérisation cathodique, notamment assistée par champ magnétique, réactive, en partant d'une cible de vanadium éventuellement « dopée » au sens de l'invention, et en présence d'oxygène. Pour obtenir la stoechiométrie voulue, celle correspondant à la phase cristalline thermochrome, on peut ajuster finement le taux d'oxygène par rapport aux gaz inertes du type Ar de la chambre de dépôt. On peut aussi partir d'une cible en oxyde, notamment sous la forme VOₓ avec x compris entre 1,5 et 2,5.

Pour obtenir le niveau de cristallisation requis, on peut faire un traitement thermique du substrat avant, pendant ou après le dépôt de la couche. Ce traitement thermique peut être fait sous vide ou non quand il précède ou suit le dépôt. Le traitement par bombardement ionique peut aussi se faire lors du dépôt de la couche ou après le dépôt. Une autre façon de favoriser la cristallisation consiste à munir la couche d'une sous-couche de nucléation adaptée, ce qui peut permettre d'abaisser la température du traitement thermique requis pour la cristallisation. La sous-couche peut aussi avoir un rôle de barrière vis-à-vis d'espèces migrant des matériaux adjacents à la couche, tout particulièrement d'ions alcalins migrant de substrats en verre, voire un rôle optique.

Ces sous-couches, qu'elles remplissent une et/ou l'autre de ces fonctions, peuvent par exemple être en dérivés de silicium, notamment en oxyde de silicium (SiOₓ) (0 < x ≤ 2), oxynitrure (SiON) ou oxycarbure de silicium (SiOC). Elles peuvent aussi être à base de nitrure de silicium (contenant éventuellement un métal minoritaire du type Al), ou à base d'oxyde de zinc ZnO.

La ou l'une au moins des couches thermochromes peut être à base d'oxyde de vanadium globalement sous-stoechiométrique en oxygène, avec notamment une formule du type VOₓ avec x < 2, notamment x compris entre 1,50 et 1,95. La couche peut être homogène dans sa composition, être sous-oxydée. Elle peut aussi être hétérogène, avec des phases riches en vanadium oxydé et des phases pauvres en vanadium oxydé, c'est-à-dire des phases où le vanadium est sous forme métallique ou quasi-métallique. On a alors une structure de type CERMET, c'est-à-dire où l'on a une matrice céramique (oxyde de vanadium stoechiométrique, sous-stoechiométrique ou sur-stoechiométrique en oxygène) avec des inserts métalliques (vanadium métallique). L'avantage de ce type de structure est que l'on peut alors avoir une couche bi-fonctionnelle :
d'une part, elle est thermochrome car elle contient de l'oxyde de vanadium présentant cette propriété, d'autre part elle a des propriétés thermiques, notamment de réflexion des infrarouges, de par la présence de vanadium métallique (de propriétés analogues à l'argent). De fait, il n'y a plus besoin d'ajouter à la couche une couche réfléchissante du type Ag : l'invention a également pour objet un vitrage muni d'une telle couche thermochrome sous-stoechiométrique globalement en oxygène, une couche à structure de type CERMET, indépendamment de toute association avec des couches ayant d'autres fonctionnalités qu'une fonctionnalité thermochrome (couche à rôle optique, thermique, électrique, etc...).

L'épaisseur de la ou des couches à base d'oxyde de vanadium est à choisir en prenant en compte différents paramètres : quand on l'utilise seule, il faut généralement trouver le compromis le plus acceptable en fonction de l'application envisagée pour le vitrage. En effet, l'oxyde de vanadium est absorbant et assez coloré dans le visible (couleur « bronze » marquée), et on cherche généralement à avoir le contraste en transmission énergétique T_{E} le plus important possible, alors que la coloration dans le visible et la transmission énergétique sont des fonctions croissantes de l'épaisseur de la couche.

Selon l'invention, elle se trouve associée à l'autre type de couches, et son épaisseur est donc ainsi à choisir en fonction de celle-ci quand on recherche une interaction interférentielle entre lesdites couches. Usuellement, les couches à base d'oxyde de vanadium selon l'invention ont une épaisseur comprise entre 10 nm et 300 nm, de préférence entre 30 nm et 100 nm.

Selon une variante préférée de l'invention, la (les) couche(s) à base d'oxyde de vanadium et la (les) couche(s) à propriétés thermiques ou optiques fait (font) partie d'un même empilement de couches minces déposées sur la même face du substrat constitutif ou de l'un des substrats constitutifs du substrat. C'est bien sûr dans cette configuration que l'on peut obtenir un vitrage aux propriétés les plus originales, par interaction interférentielle entre les deux types de couches. Elles présentent de préférence une interface commune. (Alternativement, une ou des couches minces intermédiaires peuvent être interposées entre elles).

Le type d'empilement susceptible d'incorporer ces deux types de couches peut s'inspirer des empilements de couches à propriétés thermiques existant déjà sur le marché ou tout au moins dans la littérature. Il est ainsi connu des empilements de couches bas-émissifs ou anti-solaire qui présentent la configuration :
diélectrique/couche fonctionnelle/diélectrique.

Des empilements plus sélectifs dédoublent cette séquence, pour obtenir des configurations du type :
diélectrique/couche fonctionnelle/diélectrique/couche
fonctionnelle/diélectrique
avec les couches fonctionnelles qui sont par exemple en argent, et les diélectriques D sous forme de couches ou d'empilements de couches à base de matériau du type oxyde métallique, dérivés d'oxyde de silicium, nitrures du type AlN ou Si₃N₄.

On a ainsi des empilements connus du type :
D1/Ag/D2 ou D1/Ag/D2/Ag/D3
sachant qu'aux interfaces entre les couches d'argent Ag et les couches en diélectrique D, il peut y avoir de fines couches à fonction sacrificielle, de nucléation etc... . On peut se reporter, par exemple, aux enseignements des brevets EP-638 528, EP-678 484, EP-718 250, EP-844 219 ou EP-847 965 pour plus de détails sur la nature des couches, leurs épaisseurs et leur mode de dépôt.

En reprenant donc ce type d'empilement, on peut selon la présente invention substituer l'une au moins des couches constitutives des diélectriques par la couche thermochrome à base de vanadium. Un des diélectrique peut ainsi être totalement remplacé par la couche en oxyde de vanadium, ou se trouver sous forme d'un multicouches associant à une ou plusieurs couches de diélectrique conventionnelles une couche d'oxyde de vanadium thermochrome.

Dans le cas spécifique des empilements utilisant deux couches à propriétés thermiques, notamment deux couches d'argent, il est préférable que ce soit le diélectrique D2, celui qui se trouve contre les deux couches d'Ag qui soit ainsi totalement ou partiellement remplacé.

Les matériaux diélectriques « conventionnels» évoqués plus haut peuvent être choisis parmi ZnO, TiO₂, SnO₂, Nb₂O₅, Ta₂O₅, AlN, Si₃N₄, SiAlN, SiON, SiOC, SiO₂, ou mélange d'au moins deux de ces matériaux.

Les empilements précités, utilisant deux couches d'argent et au moins une couche d'oxyde de vanadium sont vraiment intéressants : ils peuvent conférer aux vitrages des propriétés anti-solaires exceptionnelles quand il commence à faire chaud, quand l'oxyde de vanadium commute vers un état métallique. En outre, cette commutation sur le plan thermique se « voit » pour l'utilisateur, ce qui leur donne un intérêt esthétique supplémentaire. Elle peut procurer aussi un confort visuel accru, à l'intérieur d'un bâtiment ou d'un véhicule équipé d'un tel vitrage, en permettant de tamiser la lumière en cas de fort ensoleillement.

Une autre variante de l'invention consiste à déposer la ou les couche(s) à base d'oxyde de vanadium et la ou les couche(s) à propriétés thermiques sur l'une et l'autre face d'un même substrat constitutif du vitrage, ou, respectivement sur une face d'un premier substrat constitutif et sur une face d'un second substrat constitutif dudit vitrage. On peut alors associer sur un même vitrage deux types de couches dans leurs configurations connues (d'un côté, par exemple la couche d'oxyde de vanadium éventuellement associée à une sous-couche de nucléation/surcouche de protection, et de l'autre, un empilement à une ou deux couches fonctionnelles comme décrit plus haut). Cela simplifie la réalisation du vitrage, mais limite les performances du vitrage dans son ensemble en limitant les possibilités d'interactions interférentielles entre les deux types de couches.

Selon un mode de réalisation de l'invention, comme évoqué plus haut, on peut associer à la ou les couches thermochromes une ou plusieurs couches conductrices électriquement. Ces couches conductrices peuvent être en métal ou en nitrure métallique, du même type que les couches réfléchissant les infrarouges mentionnées plus haut. De préférence, elles sont cependant choisies à base d'oxyde conducteur transparent, du type oxyde d'indium dopé, notamment à l'étain (ITO), oxyde de zinc dopé (notamment dopé Al), oxyde d'étain dopé (notamment dopé au fluor ou à l'antimoine).

Le but principal d'une telle couche est de pouvoir provoquer la commutation de la ou des couches thermochromes par chauffage à l'aide de ces couches conductrices munies de moyens de connexion appropriés à une alimentation en électricité. Par effet Joule, la couche conductrice s'échauffe quand elle est alimentée en électricité, et elle transmet cette chaleur à la couche thermochrome pour la faire commuter à volonté vers son état réfléchissant/absorbant. Beaucoup de variantes sont possibles. On peut régler le niveau de conductivité électrique de la couche conductrice (nature chimique, type de dopage, épaisseur, ...), en fonction du type de couche thermochrome utilisée (température de commutation élevée ou abaissée par dopage, ...) et de la position respective de la couche conductrice et de la couche thermochrome. A titre d'exemple, on peut utiliser des couches métalliques du type Ag d'une épaisseur allant de 5 à 50 nm, notamment de 8 à 30 nm. Une couche en ITO peut avoir une épaisseur allant de 50 à 500 nm, notamment de 100 à 300 nm.

Ainsi, les deux types de couches sont de préférence disposées soit sur la même face du substrat ou de l'un des substrats constitutifs, soit sur les faces opposées dudit substrat. En effet, quand les substrats envisagés sont en verre, il est préférable qu'il n'y ait qu'au plus une épaisseur de verre séparant la couche conductrice de la couche thermochrome (de préférence un verre relativement mince, d'au plus 2 ou 3 mm d'épaisseur par exemple).

L'alimentation électrique est à choisir en fonction de tous ces paramètres : le type de connectique utilisé pour la couche conductrice peut consister en deux clinquants métalliques déposés sur deux bords opposés de la couche conductrice, comme cela peut être connu pour les couches chauffantes à application anti-buée ou anti-givre équipant les vitrages automobiles ou d'avion par exemple. On peut choisir une alimentation en tension ou en intensité, avec un signal déclenchant la commutation de la couche étectrochrome qui peut être un signal carré, ou prévoir une montée en tension croissante, exponentielle par exemple.

On peut ainsi obtenir la commutation de la couche thermochrome de deux façons :
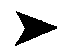 de façon spontanée par échauffement par des rayons solaires par exemple,
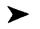 et/ou par commande électrique.

L'alimentation électrique peut être régulée par tous moyens électroniques/informatiques. Si l'oxyde de vanadium n'est pas modifié/dopé et que sa température de commutation est élevée, cette commande électrique éventuellement régulée, peut permettre ainsi d'obtenir la commutation à température ambiante plus faible, vers 30 ou 40°C par exemple. L'association d'une couche thermochrome et d'une couche conductrice susceptible d'être alimentée en électricité confère donc une plus grande maîtrise de l'état de commutation de la couche thermochrome, une plus grande liberté.

La configuration la plus simple est d'avoir une séquence du type :
① - couche conductrice / substrat / couche thermochrome
② - substrat / couche conductrice / couche thermochrome
③ - substrat / couche thermochrome / couche conductrice

Optionneltement, on peut insérer entre le substrat (s'il est en verre) et la couche conductrice, une couche barrière aux alcalins du type SiO₂, SiOC dans les configurations ① et ②.

Optionnellement, dans la configuration ③, on peut prévoir une couche barrière entre le substrat (s'il est en verre) et la couche thermochrome.

Optionnellement, dans les configurations ② et ③, on peut prévoir une fine couche barrière, par exemple en oxyde métallique du type SnO₂, entre la couche conductrice et la couche thermochrome, en particulier quand la couche conductrice est à base d'oxyde dopé comme de l'ITO.

Ces configurations peuvent aussi comporter d'autres couches, notamment à fonction optique (sur ou sous la couche thermochrome, sur ou sous la couche conductrice, entre les deux couches quand elles sont superposées ...).

Le vitrage selon l'invention comprend de préférence un ou plusieurs substrats rigides ou semi-rigides en verre ou en matériau polymère du type polycarbonate PC, polychlorure de vinyle PVC, polyméthacrylate de méthyle PMMA.

Il peut s'agir d'un vitrage « monolithique » (un seul substrat). Il peut aussi s'agir d'un vitrage feuilleté ou d'un vitrage multiple isolant du type double ou triple vitrage. Le vitrage peut comporter au moins un verre bombé et/ou trempé.

Les vitrages selon l'invention peuvent présenter des propriétés de contrôle solaire marquées, avec notamment une diminution de leur transmission énergétique ΔT_{E} d'au moins 5%, une diminution de leur transmission lumineuse ΔT_{L} d'au moins 5% et une augmentation de leur réflexion lumineuse ΔR_{L} d'au moins 10% lorsqu'ils passent d'une température inférieure à la température de commutation des couches à base d'oxyde de vanadium à une température qui lui est supérieure.

L'invention propose aussi des vitrages de contrôle solaire dont le comportement thermique/optique est différencié, par exemple, selon la saison ou le moment du jour.

Selon un autre mode de réalisation, elle propose des vitrages utilisant au moins une couche en diélectrique destinée à anti-refléter dans le visible la couche d'oxyde de vanadium. La ou les couches de diélectrique sont choisies en sélectionnant de façon appropriée leurs indices de réfraction, leurs positions dans l'empilement et leurs épaisseurs. Il peut s'agit s'agir, par exemple, d'oxydes métalliques comme TiO₂, SnO₂, Ta₂O₅, Nb₂O₅, ZnO et/ou de dérivés de silicium comme SiOC, SiO₂, Si₃N₄, SiON et/ou de l'AlN.

Comme évoqué plus haut, de préférence toutes les couches minces dont sont munies les vitrages selon l'invention sont déposées sous vide, notamment par pulvérisation cathodique (au moins les couches à base d'oxyde de vanadium, et avantageusement les autres aussi). Les couches conductrices à base d'oxyde dopé, notamment SnO₂ :F peuvent aussi avantageusement être déposées par pyrolyse, notamment par CVD ou pyrolyse de poudre, de façon connue.

L'invention sera maintenant décrite en détails à l'aide d'exemples de réalisation non limitatifs.

Les exemples qui suivent utilisent des couches déposées par pulvérisation cathodique sur des substrats en verre silico-sodo-calcique clair de 2 mm d'épaisseur. (Ces résultats sont obtenus par modélisation mathématique).

Les exemples suivants 1 à 3ter concernent le premier mode de réalisation de l'invention, associant à des empilements à deux couches d'argent une couche d'oxyde de vanadium.

### EXEMPLE 1

L'empilement de couches minces est le suivant :

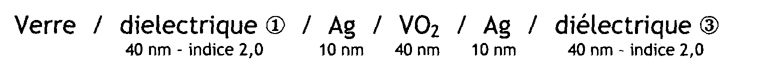

Le VO₂ n'est pas dopé.

### EXEMPLE 1 BIS

L'empilement est identique à l'exemple 1, mais la couche de VO₂ est ici de 60 nm.

### EXEMPLE 2

L'empilement de couches minces est le suivant :

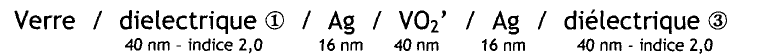

Le « VO₂' » est ici modifié avec un taux de fluor tel que sa température de commutation est abaissée jusqu'à environ 30° C.

### EXEMPLE 3

L'empilement de couches minces est le suivant :

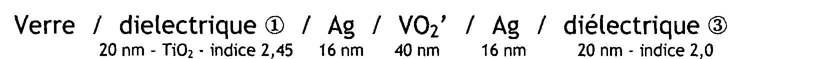

Le « VO₂' » est identique à celui de l'exemple 2.

### EXEMPLE 3 BIS

L'exemple 3bis est identique à l'exemple 3, sauf sur un point : les couches d'argent ont ici une épaisseur de 15 nm chacune.

### EXEMPLE 3 TER

L'exemple 3ter est identique à l'exemple 3, sauf sur un point : les couches d'argent ont ici une épaisseur de 14 nm chacune.

Les cinq verres revêtus sont ensuite montés en double vitrage, avec un second verre non revêtu, en verre silico-sodo-calcique clair de 2 mm d'épaisseur et une lame de gaz de 12 mm d'épaisseur entre les deux verres.

Les mesures photométriques détaillées dans le tableau 1 ci-dessous sont faites côté couches. Il est prévu que les couches soient face 2 une fois le double vitrage monté dans le bâtiment (ou les véhicules). (Conventionnellement, on numérote les faces des verres du vitrage en commençant par la face la plus extérieure).
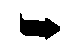 T_{L} signifie : transmission lumineuse en %, selon l'illuminant D₆₅,
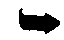 froid/chaud signifie : la couleur du paramètre considérée, selon que l'on est au-dessous ou au-dessus de la température de commutation des couches à base d'oxyde de vanadium,
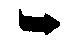 T_{E} signifie : transmission énergétique, en %,
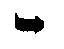 R_{L} signifie : réflexion lumineuse, en %,
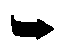 Pₑ signifie : pureté de la couleur en transmission, en %,
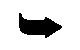 λ_{d} signifie : longueur d'onde dominante de la couleur en transmission, en nm.

**TABLEAU 1**

| **Exemple** | **1** | **1BIS** | **2** | **3** | **3BIS** | **3TER** |
|---|---|---|---|---|---|---|
| T_{L}(froid/chaud) | 32.4/28.8 | 24.7/21.7 | 26.3/14.6 | 21.6/11.4 | 24.4/13.3 | 27.2/15.4 |
| λ_{d} (froid/chaud) | 576/563 | 577/567 | 526/483 | 499/480 | 508/481 | 529/482 |
| P_{C} (froid/chaud) | 29/20 | 41/32 | 5/25 | 7.6/34 | 4.9/31 | 4.5/27 |
| T_{E} (froid/chaud) | 22/15 | 19/11 | 13/8 | 10.6/6.5 | 12.2/7.5 | 14/8.6 |
| R_{L} (froid/chaud) | 22/25 | 24/25 | 31/46 | 22/38 | 18/34 | 15/30 |

De ces données, on peut voir l'intérêt à utiliser ces vitrages pour équiper des bâtiments : la combinaison de couches d'argent avec des couches d'oxyde de vanadium permet d'obtenir des contrastes de commutation en T_{E} d'au moins 5 jusqu'à 8%, associés à des forts contrastes de commutation en T_{L} et en R_{L}.

A titre de comparaison avec un double vitrage muni en face 2 seulement d'une couche de VO₂ de 50 nm, on obtient une T_{E} (froid/chaud) de 29.8 et 23.8% respectivement, une T_{L} (froid/chaud) de 30.7 et 29.9% respectivement, et une R_{L} (froid/chaud) de 31 et 28% respectivement. On a bien un contraste de T_{E}, mais pas de contraste de T_{L} et peu de contraste de R_{L}, avec un effet anti-solaire bien moins marqué.

Les vitrages selon l'invention ont une valeur de R_{L}, notamment en ce qui concerne les exemples 2 à 3ter, qui varie considérablement selon l'état « froid » ou « chaud » du vitrage : on a donc un vitrage qui devient beaucoup plus réfléchissant dès qu'il passe dans son état « chaud », ce qui permet à l'utilisateur de « voir » quand son vitrage devient plus filtrant sur le plan thermique, ce qui est attractif et original.

Un critère intéressant consiste à considérer le ratio T_{L}(froid)/T_{E}(chaud), dans la mesure où on cherche à avoir la transmission lumineuse la plus élevée possible aux basses températures et à avoir la transmission énergétique la plus faible possible aux hautes températures : avec l'exemple comparatif utilisant une couche de VO₂ de 50 nm, ce ratio n'est que de 1,3, alors que ce ratio est supérieur ou égal à 2 pour les exemples selon l'invention.

On voit aussi de ces différents exemples que l'on peut ajuster quantités de paramètres pour obtenir la couleur, le niveau de T_{E}, l'intensité de couleur voulue. On peut ainsi modifier les épaisseurs des couches, remplacer totalement ou non un des diélectriques par du VO₂, choisir le diélectrique à l'indice de réfraction le plus approprié.

On peut souligner que notamment les exemples 3bis et 3ter ont une pureté de coloration en transmission de moins de 5% à l'état « froid» : on peut aussi avoir dans cet état des vitrages particulièrement neutres, de couleur peu intense.

L'invention a donc permis de mettre au point des vitrages présentant une très grande adaptabilité thermique, et qui sont optiquement esthétiques en jouant sur la synergie entre des couches thermochromes et des couches différentes. Elle permet de proposer des vitrages (été/hiver) en proposant des couples de données T_{L}/T_{E} à l'état « froid » et à l'état « chaud » originaux.

L'invention n'est pas limitée à cette combinaison spécifique, et englobe aussi la combinaison de couches thermochromes à base d'oxyde de vanadium avec une ou plusieurs couches à rôle essentiellement optique. Ainsi, on peut associer à des couches thermochromes des « surcouches » et/ou des « sous-couches» à base de diélectrique, d'indice de réfraction approprié pour en améliorer/affiner les performances optiques.

L'exemple 4 suivant concerne ainsi le second mode de réalisation de l'invention, associant à la couche d'oxyde de vanadium une ou plusieurs couches en diélectrique destinées à l'anti-refléter.

### EXEMPLE 4

L'empilement, sur le même verre que les exemples précédents, est le suivant :

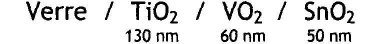

En double vitrage, avec les couches en face 2 dans le même montage que les exemples précédents, on a un contraste en T_{L} de 9.2% entre l'état « chaud » et l'état « froid» grâce à la couche de VO₂. Mais on obtient des niveaux de T_{L} supérieurs à ce que l'on obtient avec la couche de VO₂ seule : 53.4% à l'état « froid », 50.9% à l'état « chaud» (au lieu de 31.0% à l'état « froid » et 29.5% à l'état « chaud » pour une couche de VO₂ de 60 nm seule) : les couches de diélectriques entourant la couche de VO₂ permettent aussi un gain de T_{L} de presque 20% dans les états « froid » et « chaud », par interaction interférentielle.

### EXEMPLE 4 BIS

L'empilement, toujours sur le même type de verre, consiste à substituer à la première couche en TiO₂ de l'exemple 4 une couche en ZnO d'épaisseur optique appropriée (ou tout autre couche d'indice de réfraction inférieur à 2.45, notamment compris entre 1.90 et 2.30).

### EXEMPLE 5

L'empilement, toujours sur le même type de verre, consiste à associer à la couche à base de VO₂ une couche conductrice en ITO. Il s'agit de :

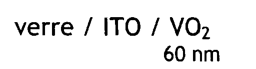

Le couche d'ITO est munie de deux clinquants de cuivre et alimentée par un générateur de tension : son épaisseur et la tension sont ajustées afin de pouvoir faire commuter le VO₂ vers son état absorbant à volonté, même quand la température ambiante est inférieure à sa température de commutation.

## Revendications

1. Vitrage comportant au moins une couche à propriétés thermochromes à base d'oxyde de vanadium, éventuellement sous-stoechiométrique en oxygène, ***caractérisé en ce qu'il*** comporte également au moins une autre couche à propriétés thermiques, notamment réfléchissante dans l'infrarouge et/ou au moins une autre couche à propriétés optiques, notamment anti-réfléchissante dans le visible et/ou au moins une couche à propriétés de conduction électrique.

2. Vitrage selon la revendication 1, ***caractérisé en ce que*** la (les) couche(s) à propriétés thermique est (sont) à base de métal ou d'alliage métallique choisi parmi l'un au moins des matériaux suivants : or, argent, nickel, chrome, acier, Inconel, éventuellement partiellement nitruré.

3. Vitrage selon la revendication 1, ***caractérisé en ce que*** la (les) couche(s) à propriétés thermiques est (sont) à base de nitrure(s) métallique(s) choisi(s) parmi au moins l'un des nitrures suivants : nitrure de titane, nitrure de niobium, nitrure de zirconium, nitrure de chrome.

4. Vitrage selon l'une des revendications 1 à 3, ***caractérisé en ce que*** la (les) couche(s) à base d'oxyde de vanadium est (sont) modifiée(s) afin d'abaisser sa (leur) température de commutation T_{C} à une valeur inférieure à 60 ou à 45°C, notamment comprise entre 25 et 40°C.

5. Vitrage selon la revendication 4, ***caractérisé en ce que*** la (les) couche(s) à base d'oxyde de vanadium comprend au moins un dopant choisi parmi les halogènes du type fluor, et/ou parmi des métaux du type titane, niobium, molybdène, iridium, tungstène.

6. Vitrage selon l'une des revendications précédentes, ***caractérisé en ce que*** la (les) couche(s) à base d'oxyde de vanadium est (sont) cristallisée(s) au moins partiellement par un traitement thermique ou un bombardement ionique.

7. Vitrage selon l'une des revendications précédentes, **caractérisé en ce que** la couche à propriétés thermochromes, ou au moins l'une d'entre elles quand il y en a plusieurs, est à base d'oxyde de vanadium sous-stoechiométrique en oxygène, avec notamment une formule VOₓ avec x < 2, notamment compris entre 1,50 et 1,95.

8. Vitrage selon la revendication 7, **caractérisé en ce que** la couche à base d'oxyde de vanadium sous-stoechiométrique en oxygène contient une phase « riche » en vanadium sous forme oxydée, et une phase « pauvre » où le vanadium est sous forme métallique, dans une structure de type CERMET.

9. Vitrage selon l'une des revendications précédentes, ***caractérisé en ce que*** la couche à base d'oxyde de vanadium est munie d'une sous-couche de nucléation et/ou faisant fonction de barrière aux alcalins, notamment à base de SiO₂, SiON, SiOC, nitrure de silicium, oxyde de zinc.

10. Vitrage selon l'une des revendications précédentes, ***caractérisé en ce que*** la (les) couche(s) à base d'oxyde de vanadium a (ont) une épaisseur comprise entre 10 nm et 300 nm, de préférence entre 30 nm et 100 nm.

11. Vitrage selon l'une des revendications précédentes, ***caractérisé en ce que*** la (les) couche(s) à base d'oxyde de vanadium et la (les) couche(s) à propriétés thermiques et/ou la (les) couche(s) à propriétés optiques et/ou la (les) couche(s) à propriétés de conduction électrique, font partie d'un empilement de couches minces déposées sur la même face du substrat constitutif ou de l'un des substrats constitutifs dudit vitrage.

12. Vitrage selon l'une des revendications précédentes, ***caractérisé en ce que*** l'empilement de couches est du type D₁/Ag/D₂ ou D₁/Ag/D₂/Ag/D₃, avec D_{1,2,3} une couche ou une superposition de couches en matériau diélectrique, une au moins desdites couches étant remplacée par la couche thermochrome à base d'oxyde de vanadium.

13. Vitrage selon la revendication 12, ***caractérisé en ce que*** l'empilement de couches est du type D₁/Ag/D₂/Ag/D₃, avec D₂ comprenant au moins une couche thermochrome à base d'oxyde de vanadium.

14. Vitrage selon l'une des revendications 11 ou 12, ***caractérisé en ce que*** les matériaux diélectriques des couches D_{1,2,3} sont choisis parmi les oxydes métalliques tels que ZnO, TiO₂, SnO₂, Nb₂O₅, Ta₂O₅, les nitrures tels que AlN, Si₃N₄ ou un mélange de deux nitrures, des oxydes, oxycarbures ou oxynitrures de silicium.

15. Vitrage selon l'une des revendications précédentes, ***caractérisé en ce que*** la ou les couches à propriétés optiques, notamment anti-réfléchissantes dans le visible sont choisies en matériau diélectrique comprenant les oxydes métalliques tels que ZnO, TiO₂, SnO₂, Nb₂O₅, Ta₂O₅, les nitrures comme Si₃N₄ ou AlN ou les oxydes, oxycarbures ou oxynitrures de silicium.

16. Vitrage selon l'une des revendications précédentes, ***caractérisé en ce que*** la ou les couches à propriétés de conduction électrique sont choisies à base de métal ou d'oxyde conducteur transparent, du type oxyde d'indium dopé à l'étain ITO, d'oxyde de zinc dopé, oxyde d'étain dopé.

17. Vitrage selon l'une des revendications précédentes, ***caractérisé en ce qu'il*** comporte une couche à propriétés de conduction électrique munie de moyens de connexion à une alimentation électrique, ladite couche et la (les) couche(s) à propriétés thermochromes étant de préférence respectivement disposées sur l'une et l'autre face d'un même substrat constitutif du vitrage ou sur la même face dudit substrat constitutif.

18. Vitrage selon l'une des revendications 1 à 10, ***caractérisé en ce que*** la (les) couche(s) à base d'oxyde de vanadium et la (les) couche(s) à propriétés thermiques sont respectivement disposées sur l'une et l'autre face d'un même substrat constitutif du vitrage, ou, respectivement, disposées sur une face d'un premier substrat constitutif et sur une face d'un second substrat constitutif dudit vitrage.

19. Vitrage selon l'une des revendications précédentes, ***caractérisé en ce qu***'il comporte un ou plusieurs substrats rigides ou semi-rigides en verre, ou en matériau polymère du type polycarbonate PC, polychlorure de vinyle PVC, polyméthacrylte de méthyle PMMA.

20. Vitrage selon l'une des revendications précédentes, ***caractérisé en ce qu***'il s'agit d'un vitrage monolithique, d'un vitrage feuilleté, ou d'un vitrage multiple isolant du type double ou triple vitrage.

21. Vitrage selon l'une des revendications précédentes, ***caractérisé en ce qu***'il présente des propriétés de contrôle solaire, avec une diminution dans sa transmission énergétique ΔT_{E} d'au moins 5%, une diminution dans sa transmission lumineuse ΔT_{L} d'au moins 5% et une augmentation de sa réflexion lumineuse ΔR_{L} d'au moins 10%, lorsqu'il passe d'une température inférieure à la température de commutation T_{C} de l'oxyde de vanadium à une température supérieure à celle-ci.

22. Vitrage selon l'une des revendications précédentes, ***caractérisé en ce qu'il*** présente des propriétés de contrôle solaire avec un ratio T_{L}(froid)/T_{E}(chaud) supérieur ou égal à 2, T_{L}(froid) étant sa transmission lumineuse en dessous de la température de commutation T_{C} de l'oxyde de vanadium et T_{E}(chaud) étant sa transmission énergétique au-dessus de ladite température T_{C}.

23. Procédé d'obtention du vitrage selon l'une des revendications précédentes, ***caractérisé en ce que*** la (les) couche(s) à base d'oxyde de vanadium et de préférence également la (les) couche(s) à propriétés thermiques et/ou les couches à propriétés optiques et/ou les couches à propriétés de conduction électrique sont déposées sous vide, notamment par pulvérisation cathodique.

24. Procédé de mise en oeuvre du vitrage selon l'une des revendications précédentes, muni d'au moins une couche thermochrome et d'au moins une couche à propriétés de conduction électrique, ***caractérisé en ce qu'on*** fait commuter la ou les couches thermochromes par une alimentation électrique appropriée de la couche à propriétés de conduction électrique.
